# EUROPÄISCHE PATENTSCHRIFT

(11) **EP 2 424 757 B1**
(45) Veröffentlichungstag und Bekanntmachung des Hinweises auf die Patenterteilung: **03.08.2016**
(21) Anmeldenummer: 10702026.5
(22) Anmeldetag: 16.01.2010
(51) Int. Cl.: B60T 17/08

(54) **DICHTELEMENT FÜR EINEN BREMSZYLINDER**
SEALING ELEMENT FOR A BRAKE CYLINDER
ÉLÉMENT D'ÉTANCHÉITÉ POUR UN CYLINDRE DE FREIN

(30) Priorität: 02.05.2009 DE 102009019569
(43) Veröffentlichungstag der Anmeldung: 07.03.2012
(73) Patentinhaber: WABCO GmbH, 30453 Hannover (DE)
(72) Erfinder: RICHTER, Andreas, 30900 Wedemark (DE); SZUBERSKI, Oktawian, PL-54-129 Wroclaw (PL)
(74) Vertreter: Lauerwald, Jörg
(86) Internationale Anmeldenummer: PCT/EP2010/000225
(87) Internationale Veröffentlichungsnummer: WO 2010/127726

(56) Entgegenhaltungen:
- WO-A1-2004/002799
- DE-A1-102005 005 722
- GB-A- 1 237 641
- US-A- 3 331 291
- US-A- 4 890 540
- US-A- 5 263 403
- US-A- 5 671 654
- US-A- 6 164 187
- US-A1- 2004 134 344
- US-A1- 2007 131 498
- US-B1- 7 121 191

## Beschreibung

Die Erfindung betrifft ein Dichtelement für einen Bremszylinder, insbesondere für einen als Membranzylinder ausgebildeten Federspeicher-Druckluftbremszylinder, nach dem Oberbegriff des Patentanspruchs 1.

Aus der DE 102005005722 A1 und aus der DE 10228934 A1 sind Federspeicherbremszylinder mit Beatmungseinrichtungen bekannt. Diese Federspeicherbremszylinder weisen eine fest installierte Löseschraube auf, welche gleichzeitig auch den Federspeicherbremszylinder an dieser Stelle abdichten.

Aus der DE 102006030256 A1 geht ein Federspeicher-Druckluftbremszylinder als Membranzylinder hervor.

Ein weiteres derartiges Federspeicherbremszylinder ist aus der US 5 433 138 A1 bekannt.

Wird bei einem Federspeicherbremszylinder, z. B. aus Kostengründen, eine abnehmbare Löseschraube verwendet, so kann es an dieser Stelle zu Undichtigkeiten kommen, wenn eine die Öffnung der abnehmbaren Löseschraube abdeckende Staubschutzkappe nicht richtig montiert wurde oder wenn diese Staubschutzkappe defekt ist.

Es ist daher die Aufgabe der vorliegenden Erfindung eine redundante Dichtung für einen Bremszylinder bereitzustellen, um eine zusätzliche Abdichtung der Löseschraubenöffnung im Federspeichergehäuse sicherzustellen.

Diese Aufgabe wird durch die in dem Patentanspruch 1 angegebene Ausführung der Erfindung gelöst. Weiterbildungen und vorteilhafte Ausgestaltungen der Erfindung sind in den Unteransprüchen angegeben.

Ein Vorteil des erfindungsgemäßen redundanten Dichtelements besteht darin, dass bei defekter oder nicht richtig montierter Staubschutzkappe der Löseschraubenöffnung im Federspeichergehäuse dieses Dichtelement verhindert, dass Wasser und/oder Staub in den geschlossenen Federspeicherraum eintreten kann, was zu einer Beeinträchtigung der Funktions- und Lebensdauer führen würde, während der Bremszylinder in Fahrtstellung befindet.

Das erfindungsgemäße zusätzliche Dichtelement und/oder der erfindungsgemäße Stopfen werden bevorzugt aus einem elastischen Kunstoff oder Gummi oder einer gummiartigen Mischung hergestellt.

Bevorzugt ist das zusätzliche Dichtelement an einem ersten topfförmigen Gehäuse eines Federspeicherbremszylinders oder zwischen einem ersten topfförmigen Gehäuse eines Federspeicherbremszylinders und einer Führung für eine erste Feder des Federspeicherbremszylinders angeordnet. Die zusätzliche Dichtung kann hierbei eine zentrale Öffnung aufweisen, wobei diese zentrale Öffnung derart ausgestaltet ist, beispielsweise durch einen kreuzförmigen Einschnitt, dass diese zentrale Öffnung ohne eine durch diese zentrale Öffnung hindurchgeführte Löseschraube nahezu vollständig geschlossen ist.

Die Erfindung wird anhand der einzigen Figur näher erläutert.

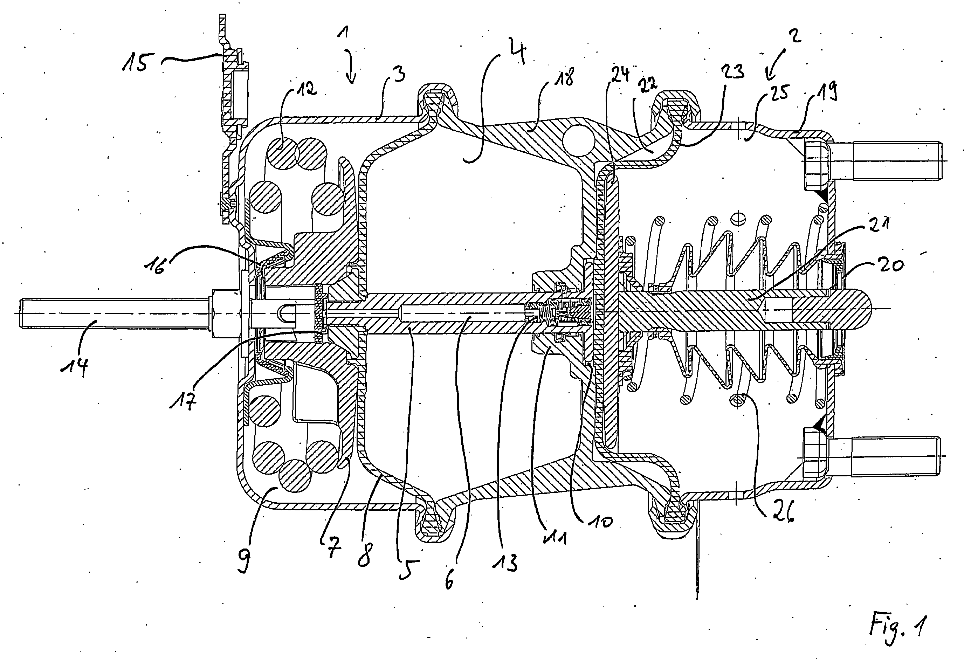

In Fig. 1 ist ein kombinierter Federspeicher- und Betriebsbremszylinder (1, 2) dargestellt, der aus einem Federspeicherbremszylinder (1) und einem Betriebsbremszylinder (2) besteht, die zu einer Baueinheit zusammengefasst sind. Der Federspeicherbremszylinder (1) weist ein Gehäuse (18, 3) auf, welches aus einer für den Federspeicherbremszylinder (1) und den Betriebsbremszylinder (2) gemeinsamen Wand (18) und einem ersten topfförmigen Deckel (3) besteht. Im Gehäuse (18, 3) ist ein als Federspeicherkolben (7) dienender Kolben mittels einer ersten Membran (8) abgedichtet in Richtung der Längsachse des Gehäuses (18, 3) verschiebbar angeordnet. Die erste Membran (8) ist zwischen der gemeinsamen Wand (18) und dem ersten topfförmigen Deckel (3) des Gehäuses (18, 3) eingespannt. Der Federspeicherkolben (7) teilt den Federspeicherbremszylinder (1) in eine als Lösekammer dienende erste Druckmittelkammer (4) und eine erste Federkammer (9) auf. In der ersten Federkammer (9) ist eine als Speicherfeder dienende erste Feder (12) angeordnet, die sich mit ihrem einen Ende am ersten topfförmigen Deckel (3) des Gehäuses (18, 3) abstützt und mit ihrem anderen Ende den Federspeicherkolben (7) in Richtung auf die erste Druckmittelkammer (4) zu (Bremsbetätigungsrichtung) beaufschlagt. An der die erste Druckmittelkammer (4) begrenzenden Seite des Kolbens (7) ist zentrisch eine erste Kolbenstange (5) mit einem zentralen durchgehenden Kanal (6) angeordnet, die sich durch die erste Druckmittelkammer (4) und eine in der Wand (18) angeordnete erste Durchgangsöffnung (10) hindurch in Richtung auf eine als Betriebsbremskammer dienende zweite Druckmittelkammer (22) des Betriebsbremszylinder (2) zu erstreckt. Die gemeinsame Wand (18) weist einen sich in die erste Druckmittelkammer (4) des Federspeicherbremszylinders (1) hineinerstreckenden umlaufenden Vorsprung auf, welcher die erste Durchgangsöffnung (10) für die erste Kolbenstange (5) des Federspeicherbremszylinders (1) begrenzt und als Führung (11) für die erste Kolbenstange (5) dient. Im zentral durchgehenden Kanal (6) der ersten Kolbenstange (5) ist ein Beatmungsventil (13) angeordnet, welches zur Beatmung der ersten Federkammer (9) des Federspeicherbremszylinders (1) dient. Die genaue Funktionsweise des Beatmungsventils (13) ist der DE 10228934 A1 zu entnehmen.

An den Federspeicherbremszylinder (1) schließt der Betriebsbremszylinder (2) an, der ein Gehäuse (18, 19) aufweist. Das Gehäuse (18, 19) des Betriebsbremszylinders (2) wird von der für den Federspeicherbremszylinder (1) und den Betriebsbremszylinder (2) gemeinsamen Wand (18) und einem zweiten topfförmigen Deckel (19) gebildet. Ein aus einer zweiten Membran (23) und einem Membranteller (24) bestehender, als Betriebsbremskolben (23, 24) dienender Kolben unterteilt den Betriebsbremszylinder (2) in die als Betriebsbremskammer dienende zweite Druckmittelkammer (22) und eine zweite Federkammer (25). Die zweite Membran (23) ist zwischen der gemeinsamen Wand (18) und dem zweiten topfförmigen Deckel (19) des Gehäuses (18, 19) eingespannt. Der Betriebsbremskolben (23, 24) wird von einer zweiten Feder (26), die sich am zweiten topfförmigen Deckel (19) abstützt, in Richtung auf die zweite Druckmittelkammer (22) zu (Bremslöserichtung) beaufschlagt. Am Membranteller (24) ist zentrisch eine zweite Kolbenstange (21) angeordnet, die durch eine zweite Durchgangsöffnung (20) im zweiten topfförmigen Deckel (19) hindurch aus dem Gehäuse (18, 19) herausgeführt ist. In der zweiten Durchgangsöffnung (20) ist ein die zweite Kolbenstange (21) umschließendes Dichtelement angeordnet, welches zusätzlich zu seiner Dichtfunktion die Funktion einer Führung für die Kolbenstange (21) hat.

Gemäß Fig. 1 befindet sich der kombinierte Federspeicher- und Betriebsbremszylinder (1 ,2) in einer Betriebsstellung, in welcher die erste Druckmittelkammer (4) des Federspeicherbremszylinders (1) mit Druck beaufschlagt und die zweite Druckmittelkammer (22) des Betriebsbremszylinders (2) drucklos ist. Die erste Feder (12) des Federspeicherbremszylinders (1) ist mittels des Federspeicherkolbens (7), welcher sich in seiner linken Endlage befindet, gespannt.

Wird über ein nicht dargestelltes Betriebsbremsventil Druckluft in die zweite Druckmittelkammer (22) des Betriebsbremszylinders (2) eingesteuert, so wird der Betriebsbremskolben (23, 24) von dem sich in der zweiten Druckmittelkammer (22) aufbauenden Druck in Bremsbetätigungsrichtung, das heißt, gegen die Kraft der zweiten Feder (26) in Richtung auf die zweite Federkammer (25) zu, angetrieben. Der Federspeicherkolben (7) des Federspeicherbremszylinders (1) verbleibt dabei in seiner dargestellten Stellung, solange die erste Druckmittelkammer (4) des Federspeicherbremszylinders (1) nicht entlüftet wird.

Wird die zweite Druckmittelkammer (22) des Betriebsbremszylinders (2) wieder entlüftet, kehrt der Betriebsbremskolben (23, 24) des Betriebsbremszylinders (2), bewirkt durch die Kraft der zweiten Feder (26), in seine Ausgangsstellung zurück.

Wird die erste Druckmittelkammer (4) des Federspeicherbremszylinders (1) über ein nicht dargestelltes Handbremsventil entlüftet, so wird der Federspeicherkolben (7) des Federspeicherbremszylinders (1) von der sich dabei entspannenden ersten Feder (12) in Bremsbetätigungsrichtung angetrieben. Dabei wird der Betriebsbremskolben (23, 24) des Betriebsbremszylinders (2) mittels der ersten Kolbenstange (5) des Federspeicherkolbens (7) des Federspeicherbremszylinders (1) in der gleichen Richtung angetrieben. Dies entspricht z. B. einer Parkstellung, in der das Fahrzeug sicher abgestellt werden kann. Um das Fahrzeug wieder bewegen zu können, muss die erste Feder (12) erneut komprimiert werden. Wenn sich, z. B. aufgrund eines Defekts, die erste Feder (12) nicht mehr pneumatisch über den Federspeicherkolben (7) komprimieren lässt, so kann mittels einer sogenannten Löseschraube (14) die erste Feder (12) mechanisch zurückstellen (komprimieren). Hierzu wird die Löseschraube (14) mittels eines geeigneten Werkzeugs drehend betätigt. Es sind bisher sowohl fest mit dem Betriebsbremszylinder (1, 2) verbundene, als auch abnehmbare Löseschrauben (14) bekannt.

Üblicherweise wird eine Öffnung im Betriebsbremszylinder (1, 2), in welche die abnehmbare Löseschraube (14) zum Komprimieren der ersten Feder (12) eingeführt wird, mittels einer Staubkappe (15) verschlossen, damit weder Schmutz noch Feuchtigkeit in das Innere des Betriebsbremszylinders (1, 2) eintreten kann. Ist die Staubkappe (15) nicht ordnungsgemäß montiert oder defekt, so kann hierdurch Schmutz bzw. Feuchtigkeit in das Innere des Betriebsbremszylinders (1, 2) eintreten. Um das zu verhindern, schlägt die vorliegende Erfindung die Verwendung eines zusätzlichen Dichtelements (16) vor, welches das Eindringen von Schmutz und Feuchtigkeit in das Innere des Betriebsbremszylinders (1, 2), insbesondere in die erste Federkammer (9) verhindert während sich der Federspeicherbremszylinder (1) in der Fahrtstellung (gelöst) befindet.

Das zusätzliche Dichtelement (16) weist hierzu Dichtlippen auf, deren Vorspannung zwischen dem ersten topfförmigen Deckel (3) und dem Federspeicherkolben (7) das Eindringen von Schmutz und Feuchtigkeit aus der direkten Umgebung des Betriebsbremszylinders (1, 2) verhindert. Zusätzlich kann im Federspeicherkolben (7) der zentral durchgehende Kanal (6) auf der der Löseschraube (14) zugewandten Seite mittels eines Stopfens(17) verschlossen werden, so dass die erste Federkammer(9) abgedichtet ist.

## Patentansprüche

1. Dichtelement für einen Bremszylinder, wobei der Bremszylinder einen Federspeicherbremszylinder (1) und einen Betriebsbremszylinder (2) umfasst, wobei der Federspeicherbremszylinder (1) als Membranzylinder ausgeführt ist, welcher eine innerhalb des Federspeicherbremszylinders (1) angeordneten ersten Feder (12) aufweist, welche mittels eines Federspeicherkolbens (7) und einer ersten Membran (8) bei Druckluftbeaufschlagung komprimierbar ist, wobei über den Federspeicherkolben (7) mittels einer erster Kolbenstange (5) eine zweite Kolbenstange (21) des Betriebsbremszylinders (2) zumindest mittelbar betätigbar ist, und wobei die erste Feder (12) bei fehlender Druckluftbeaufschlagung des Federspeicherkolbens (7) mittels eine vom Bremszylinder abnehmbaren Löseschraube (14) komprimierbar ist, **dadurch gekennzeichnet, dass** zwischen einem ersten topfförmigen Deckel (3) des Federspeicherbremszylinders (1) und der ersten Feder (12) ein zusätzliches Dichtelement (16) angeordnet ist, welches im komprimierten Zustand der ersten Feder (12) eine Abdichtung zwischen dem Federspeicherkolben (7) und einer ersten Federkammer (9) des Federspeicherbremszylinders (1) bewirkt.

2. Dichtelement für einen Bremszylinder nach Anspruch 1, **dadurch gekennzeichnet, dass** die erste Kolbenstange (5) einen zentral durchgehenden Kanal (6) aufweist, welcher mit der ersten Federkammer (9) zu deren Beatmung verbunden ist.

3. Dichtelement für einen Bremszylinder nach Anspruch 2, **dadurch gekennzeichnet, dass** innerhalb des zentral durchgehenden Kanals (6) ein Beatmungsventil (13) zur gesteuerten Beatmung der ersten Federkammer (9) angeordnet ist.

4. Dichtelement für einen Bremszylinder nach Anspruch 2 oder 3, **dadurch gekennzeichnet, dass** der zentral durchgehende Kanal (6) auf der zu der Löseschraube (14) hin gerichteten Seite mittels eines Stopfens (17) verschlossen ist.

5. Dichtelement für einen Bremszylinder nach mindestens einem der vorherigen Ansprüche, **dadurch gekennzeichnet, dass** eine Öffnung im ersten topfförmigen Deckel (3) des Federspeicherbremszylinders (1), in welche die abnehmbare Löseschraube (14) eingeführt werden kann, bei abgenommener Löseschraube (14) mittels einer Staubkappe (15) verschlossen ist.

## Claims

1. Sealing element for a brake cylinder, the brake cylinder comprising a spring-type brake cylinder (1) and a service brake cylinder (2), the spring-type brake cylinder (1) being designed as a diaphragm cylinder with a first spring (12) which is arranged within the spring-type brake cylinder (1) and which can be compressed by means of a spring store piston (7) and a first diaphragm (8) under the action of compressed air, it being possible for a second piston rod (21) of the service brake cylinder (2) to be actuated at least indirectly by means of the spring-type brake piston (7) via a first piston rod (5), and it being possible for the first spring (12), when the spring store piston (7) is not subjected to the action of compressed air, to be compressed by means of a release screw (14) which can be removed from the brake cylinder, **characterized in that** an additional sealing element (16) is arranged between a first pot-shaped cover (3) of the spring-type brake cylinder (1) and the first spring (12), which additional sealing element, when the first spring (12), is in the compressed state, generates a sealing action between the spring store piston (7) and a first spring chamber (9) of the spring-type brake cylinder (1).

2. Sealing element for a brake cylinder according to Claim 1, **characterized in that** the first piston rod (5) has a centrally continuous duct (6) which is connected to the first spring chamber (9) for ventilation of the latter.

3. Sealing element for a brake cylinder according to Claim 2, **characterized in that** a ventilation valve (13) for the controlled ventilation of the first spring chamber (9) is arranged within the centrally continuous duct (6).

4. Sealing element for a brake cylinder according to Claim 2 or 3, **characterized in that** the centrally continuous duct (6) is closed off, on the side facing toward the release screw (14), by means of a plug (17).

5. Sealing element for a brake cylinder according to at least one of the preceding claims, **characterized in that** an opening, into which the removable release screw (14) can be inserted, in the first pot-shaped cover (3) of the spring-type brake cylinder (1) is closed off by means of a dust cap (15) when the release screw (14) is removed.

## Revendications

1. Elément d'étanchéité pour un cylindre de frein, le cylindre de frein comprenant un cylindre de frein accumulateur à ressort (1) et un cylindre de frein de service (2), le cylindre de frein accumulateur à ressort (1) étant réalisé sous forme de cylindre à membrane qui présente un premier ressort (12) disposé à l'intérieur du cylindre de frein accumulateur à ressort (1), lequel ressort peut être comprimé au moyen d'un piston accumulateur à ressort (7) et d'une première membrane (8) lors d'une sollicitation par de l'air comprimé, une deuxième tige de piston (21) du cylindre de frein de service (2) pouvant être actionnée au moins indirectement par le biais du piston accumulateur à ressort (7) au moyen d'une première tige de piston (5), et le premier ressort (12), en l'absence d'une sollicitation du piston accumulateur à ressort (7) par de l'air comprimé, pouvant être comprimé au moyen d'une vis de desserrage (14) pouvant être enlevée du cylindre de frein, **caractérisé en ce qu'**entre un premier couvercle en forme de pot (3) du cylindre de frein accumulateur à ressort (1) et le premier ressort (12) est disposé un élément d'étanchéité supplémentaire (16) qui, dans l'état comprimé du premier ressort (12), réalise une étanchéité entre le piston accumulateur à ressort (7) et une première chambre à ressort (9) du cylindre de frein accumulateur à ressort (1).

2. Elément d'étanchéité pour un cylindre de frein selon la revendication 1, **caractérisé en ce que** la première tige de piston (5) présente un canal continu central (6) qui est connecté à la première chambre de ressort (9) en vue de sa ventilation.

3. Elément d'étanchéité pour un cylindre de frein selon la revendication 2, **caractérisé en ce qu'**à l'intérieur du canal continu central (6) est disposée une soupape de ventilation (13) pour la ventilation commandée de la première chambre de ressort (9).

4. Élément d'étanchéité pour un cylindre de frein selon la revendication 2 ou 3, **caractérisé en ce que** le canal continu central (6) est fermé du côté orienté vers la vis de desserrage (14) au moyen d'un bouchon (17).

5. Élément d'étanchéité pour un cylindre de frein selon au moins l'une quelconque des revendications précédentes, **caractérisé en ce qu'**une ouverture dans le premier couvercle en forme de pot (3) du cylindre de frein accumulateur à ressort (1), dans laquelle peut être introduite la vis de desserrage amovible (14), est fermée au moyen d'un capuchon anti-poussière (15) lorsque la vis de desserrage (14) est enlevée.
